# FASCICULE DE BREVET EUROPEEN

(11) **EP 3 464 988 B1**
(45) Date de publication et mention de la délivrance du brevet: **13.09.2023**
(21) Numéro de dépôt: 17726951.1
(22) Date de dépôt: 31.05.2017
(51) Int. Cl.: B23K 11/36, B23K 37/00

(54) **HOUSSE DE PROTECTION**
SCHUTZABDECKUNG
PROTECTIVE COVER

(30) Priorité: 03.06.2016 FR 1655101
(43) Date de publication de la demande: 10.04.2019
(73) Titulaire: Advanced Systems of Protection, SAS, 54690 Eulmont (FR)
(72) Inventeur: PETIT, Philippe, 54670 Millery (FR); GRANDIEU, Fabien, 54690 Eulmont (FR); PICHON, Philippe, 54690 Eulmont (FR); ARDITTI, Pierre, 54520 Laxou (FR)
(74) Mandataire: Vièl, Frédérique
(86) Numéro de dépôt international: PCT/EP2017/063235
(87) Numéro de publication internationale: WO 2017/207675

(56) Documents cités:
- WO-A1-2015/036847
- FR-A1- 2 838 362
- GB-A- 2 388 807
- JP-A- 2004 175 454
- US-A- 4 660 610

## Description

L'invention concerne une housse de protection pour des équipements, notamment pour des appareils de soudage, la housse comprenant un panneau avant et au moins deux panneaux latéraux, chaque panneau latéral comprenant une partie principale, le panneau avant et les panneaux latéraux étant munis de moyens de liaison pour relier entre eux les panneaux latéraux en vue de former un pourtour tubulaire et pour relier les panneaux latéraux au panneau avant.

Le document EP 1 504 228 B1 décrit une housse de protection pour des appareils de soudage comme décrit dans le préambule de la revendication 1, notamment les pinces de soudage par points. Cette housse résiste aux projections de soudure et est ininflammable. Elle est constituée d'un panneau avant, d'un panneau arrière et d'un pourtour tubulaire distinct à disposer entre les panneaux avant et arrière. Le panneau avant et le panneau arrière sont munis de moyens de liaison et de réglage pour les relier entre eux et régler la distance qui les sépare. Ils sont sensiblement plans et protègent la partie de l'appareil pourvue de pinces de soudage et la partie opposée à cette dernière. Le pourtour tubulaire protège la partie située entre les panneaux. Il est constitué de plusieurs panneaux reliés les uns aux autres afin que le pourtour corresponde au mieux à la circonférence de l'appareil de soudage.

Ces housses ont fait leurs preuves, mais il s'agit généralement de housses sur mesure pour un certain type d'appareil de soudage.

Le document US 4,660,610 décrit une housse isolante pour ranger une torche de soudage. Cette housse est constituée d'un pan d'un seul tenant en forme de T qui est replié sur lui-même le long de la branche centrale du T en formant une housse en forme de L à l'envers. Le bord extérieur de la branche verticale du L, formé par le milieu de la branche centrale du T, est fermé. Les bords supérieurs des branches latérales du T sont cousus ensemble en formant le bord extérieur de la branche horizontale du L, tandis que les bords inférieurs et les extrémités des branches latérales sont reliés ensemble au moyen d'anneaux en formant le bord intérieur et l'extrémité de la banche horizontale du L. Dans cet état, la housse est ouverte au niveau de l'extrémité inférieure et du bord intérieur de la branche verticale du L. Cette ouverture permet l'introduction d'une torche dans la housse. Une fois la torche mise en place dans la housse, le bord intérieur de la banche verticale peut être fermé à son tour par un rabat réalisé dans le prolongement d'un des bords latéraux de la branche centrale du T. Ce rabat, qui est réalisé dans le même pan que le reste de la housse, peut être rabattu sur le bord opposé de l'ouverture en formant avec le reste de la partie verticale de la housse un manchon tubulaire entourant la torche. L'extrémité inférieure de la housse reste ouverte et laisse passer notamment les câbles d'alimentation de la torche. Cette housse n'est pas destinée à protéger la torche lors de son utilisation, mais à la ranger momentanément lors d'une interruption de courte de durée du soudage.

Le document WO 2015/036847 A1 présent des batteries destinées à une opération de soudage. Ces batteries sont entourées d'une structure isolante. Diverses batteries de soudage peuvent être en particulier pourvues d'une ou plusieurs enveloppes de batterie qui peuvent être ouvertes ou fermées pour augmenter ou réduire leur effet d'isolation. Dans certains modes de réalisation, les enveloppes de batterie peuvent être intégrées à des batteries utilisées dans des machines à souder hybrides. Selon les besoins, l'enveloppe est donc ouverte lors de l'utilisation pour éviter que la batterie ne surchauffe.

L'objectif de l'invention est de concevoir une housse selon le préambule qui puisse être facilement adaptée à des équipements de taille différente. La housse doit protéger l'objet lors de son utilisation, tout en étant facilement démontable lorsque l'objet protégé n'est plus en fonctionnement soit pour remplacer la housse ou l'un de ses composants, soit pour accéder à l'objet protégé pour le modifier, l'entretenir ou le réparer.

Cet objectif est atteint par une housse conforme au préambule dans laquelle au moins un des panneaux latéraux présente un rabat qui peut être rabattu et fixé sur l'un des panneaux latéraux à l'aide de moyens de fixation de sorte à refermer la housse.

Un panneau latéral au moins comprend donc une partie principale destinée à la formation du pourtour tubulaire et un rabat destiné à être rabattu sur l'arrière de l'équipement à protéger. Le rabat permet une adaptation rapide de la taille de la housse à la taille de l'équipement à protéger. En effet, la partie avant de l'équipement est protégée par le panneau avant, les côtés sont protégés par le pourtour tubulaire formé par liaison entre elles des parties principales des panneaux latéraux, le pourtour tubulaire étant lui-même relié au panneau avant. Au niveau de la partie arrière, moins exposée, le rabat d'au moins un panneau latéral est rabattu et fixé sur un autre panneau latéral par les moyens de fixation, refermant ainsi la housse sur l'équipement. Cette fixation peut se faire sur la partie principale d'un panneau latéral, par exemple le panneau latéral en vis-à-vis.

Lorsque la housse est munie de plusieurs rabats, les rabats peuvent, en position rabattue et fixée, chevaucher en partie au moins le rabat d'un ou plusieurs autres panneaux latéraux, notamment le rabat des panneaux latéraux voisins. La fixation du ou des rabats peut se faire sur la partie principale d'un panneau latéral et/ou sur un autre rabat.

Un ou plusieurs panneaux peuvent être conçus pour contourner un support sur lequel est fixé l'équipement à protéger. Le ou les panneaux peuvent contourner le support soit au niveau de leur partie principale, soit au niveau de leur rabat. Pour contourner le support, on peut prévoir par exemple une échancrure dans le panneau ou le rabat. On peut aussi prévoir de faire passer le support entre les bords adjacents de deux panneaux successifs ou d'enrouler au moins partiellement un ou plusieurs rabats autour du support. Si l'objet repose au sol, on prévoira dans le pourtour tubulaire une ouverture suffisante pour contourner le point d'appui.

Pour permettre une meilleure adaptation de la housse à l'équipement à protéger, on peut prévoir de muni un ou plusieurs panneaux d'un ou plusieurs élastiques dans leur partie principale. Ces élastiques s'étendent de préférence parallèlement au panneau avant.

Pour contrôler facilement l'intérieur de la housse ou pour ranger des ustensiles, on peut réaliser une ou plusieurs fenêtres ou une ou plusieurs poches dans au moins un des panneaux latéraux. La ou les fenêtres sont de préférence fermées par un matériau souple transparent.

Il est préférable que le rabat présente une largeur moindre que celle de la partie principale. Autrement dit, le rabat est moins large que la partie principale du panneau contribuant à former le pourtour tubulaire. De ce fait, ce rabat peut être plus facilement rabattu que s'il avait la même largeur que le reste du panneau, car il peut notamment mieux contourner un support sur lequel est fixé l'équipement, par exemple un bras de robot portant un appareil de soudage ou un pied support.

Dans une variante de l'invention, les panneaux latéraux ont une partie principale essentiellement rectangulaire qui se poursuit sur un côté opposé au panneau avant par le rabat.

La largeur du rabat peut diminuer de façon continue jusqu'à l'extrémité libre du rabat. Cette diminution peut se faire de façon symétrique, ou bien ne se faire que d'un côté de sorte qu'un côté du rabat reste droit et l'autre est incliné.

Il est également possible de prévoir que le rabat ait une largeur sensiblement constante sur toute sa longueur. Ainsi, le rabat peut par exemple se présenter sous la forme d'une sangle qui, lors de la fermeture de la housse, peut être fixée à la partie principale d'un autre panneau latéral par le biais d'une boucle.

Dans le cadre de l'invention, plusieurs types de moyens de liaison et de moyens de fixation sont prévus. Ceux-ci peuvent être constitués par des boutonnières d'une part et des boutons rentrant dans ces boutonnières d'autre part. Les boutons sont de préférence des boutons champignons, c'est-à-dire des boutons constitués d'une partie supérieure en forme de disque éventuellement bombé relié à une tige rigide ou semi-rigide qui est elle-même fixée à la housse. Une autre solution consiste à utiliser des boutons, de préférence des boutons champignons, et des crochets destinés à se crocheter sur la fixation du bouton, notamment sur la tige du bouton champignon. En choisissant un crochet dont l'entrée est légèrement plus étroite que le support du bouton, on assure un encliquetage du crochet sur le bouton ce qui évite que le crochet ne se décroche tout seul. Une troisième solution consiste à utiliser des bandes autoagrippantes de type Velcro^{®}, le cas échéant complétées aux extrémités par des boutons pression. Les moyens de liaison et les moyens de fixation peuvent également être constitués par des boutons pression. Ces différentes solutions peuvent être utilisées seules ou en combinaison. Ces moyens de liaison ou de fixation permettent de relier rapidement des panneaux entre eux et au panneau avant et de fixer les rabats sur les panneaux latéraux. De plus, ils sont assez résistants pour assurer une durée de vie suffisante des moyens de liaison et de fixation et sont conçus pour régler la housse aux dimensions de l'équipement à protéger.

Dans le cadre de l'invention, les composants de la housse sont réalisés dans un matériau ininflammable et résistant aux projections de soudure.

L'utilisation d'une housse de protection conformément à l'invention pour des équipements de soudage, notamment des robots de soudage par points fait également partie de l'invention.

L'invention est décrite plus en détail ci-dessous en référence aux figures, lesquelles montrent sous deux angles différents :
Housses unies constituées uniquement de panneaux avec rabat :
   Figures 1a et 1b les éléments constitutifs d'une housse selon l'invention avant leur assemblage,
   Figures 2a et 2b la housse assemblée avant sa fermeture,
   Figures 3a et 3b la housse entièrement fermée,
   Figures 4a et 4b une autre housse avec des rabats symétriques,
   Figures 5a et 5b une autre housse avec des rabats asymétriques,
   Figures 6a et 6b une autre housse avec des rabats asymétriques ;
Housses mixtes constituées de panneaux avec rabat et de panneaux sans rabats :
   Figure 7 une housse à 4 panneaux à rabat et 4 panneaux sans rabat,
   Figure 8 une autre housse à 4 panneaux à rabat et 4 panneaux sans rabat,
   Figure 9 une housse à 4 panneaux à rabat et 2 panneaux sans rabat ;
Exemples de formes pour les panneaux latéraux avec rabat :
   Figures 10a à 10c formes sensiblement rectangle pour pourtours tubulaires sensiblement cylindriques (a) simple, (b) avec élastiques et (c) avec fenêtre ou poche ;
   Figures 11a à 11c formes allant en se rétrécissant vers le rabat pour pourtours tubulaires tronconiques (a) simple, (b) avec élastiques et (c) avec fenêtre ou poche ;
   Figure 12a à 12c formes allant en s'élargissant vers le rabat pour pourtours tubulaires en forme d'entonnoirs (a) simple, (b) avec élastiques et (c) avec fenêtre ou poche.

La housse de protection de l'invention est particulièrement bien adaptée à des appareils de soudage montés sur pieds ou sur des robots, ou posés par terre. Elle peut cependant être utilisée pour tout autre appareil nécessitant d'être protégé, par exemple de la poussière ou de projections d'eau. Elle peut être utilisée par exemple pour des préhenseurs. Les housses présentées à titre d'exemple dans les figures sont destinées à une pince de soudure par points. Elles comprennent un panneau avant (1) et des panneaux latéraux (2, 3, 4, 5, 6, 7). Tous ces panneaux (1, 2, 3, 4, 5, 6, 7) sont de préférence fabriqués dans un matériau ininflammable et résistant aux projections de soudure si la housse est destinée à un appareil de soudage ou un appareil utilisé en fonderie.

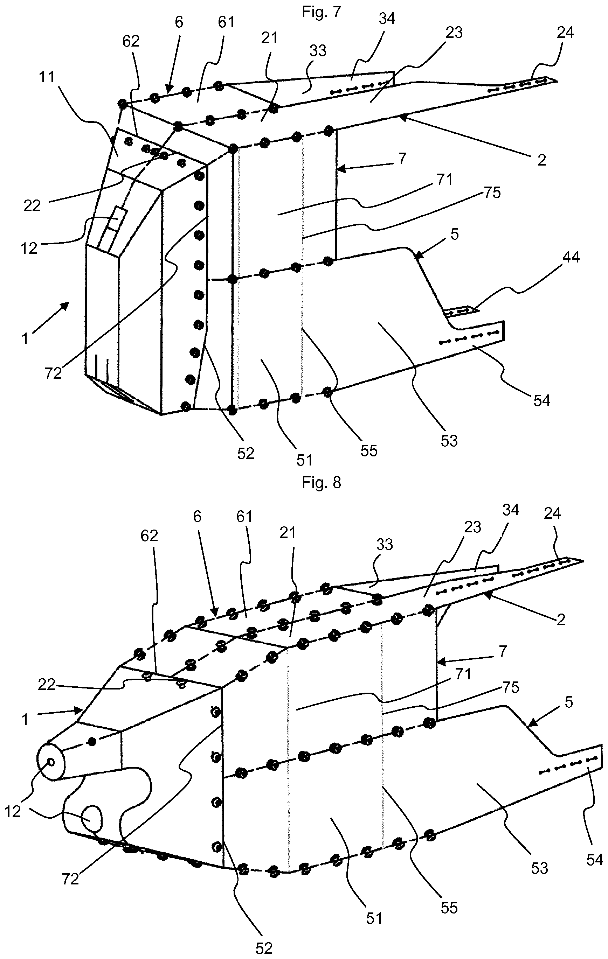

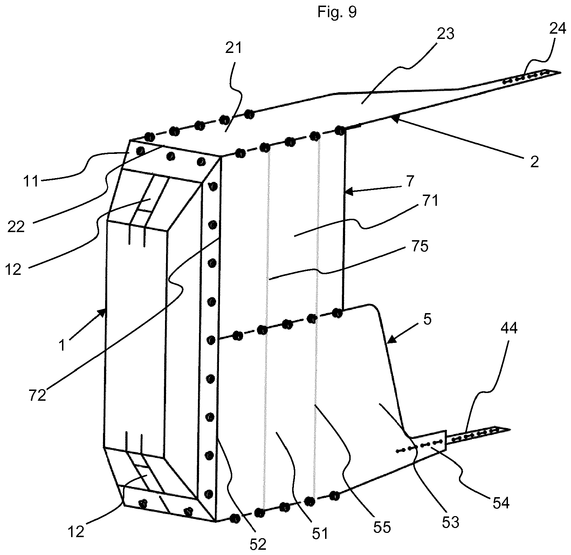

Le panneau avant (1) a une forme adaptée à la partie avant de l'appareil à protéger. Différentes formes de panneaux avant sont visibles sur les figures 7, 8 et 9. Ce panneau avant peut se prolonger au niveau de son pourtour par une jupe (11) et présente des ouvertures (12) pour laisser passer les bras de la pince de soudage.

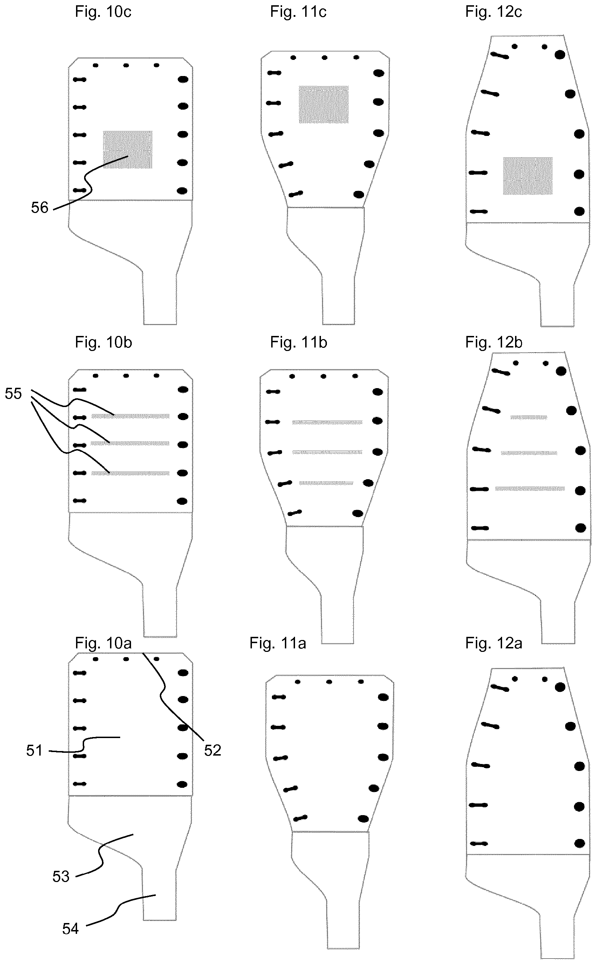

Les panneaux latéraux (2, 3, 4, 5, 6, 7) ont tous une partie principale (21, 31, 41, 51, 61, 71) généralement polygonale. Un des bords (22, 32, 42, 52, 62, 72) de la partie principale, appelé bord avant, est destiné à être relié au panneau avant (1). Si les parties principales sont rectangulaires (cf. figures 10a/b/c), le pourtour tubulaire aura une forme sensiblement cylindrique. Pour permettre une forme s'écartant du cylindre, on peut prévoir que les bords latéraux de la partie principale se rapprochent l'un de l'autre du côté du bord avant (cf. figures 12a/b/c) donnant au pourtour tubulaire une forme de type entonnoir et/ou du côté opposé (cf. figures 11a/b/c) donnant alors un pourtour tubulaire une forme de type tronconique. Il est également envisageable que les bords latéraux soient convexes pour donner au pourtour tubulaire une forme bombée au centre de type sphérique.

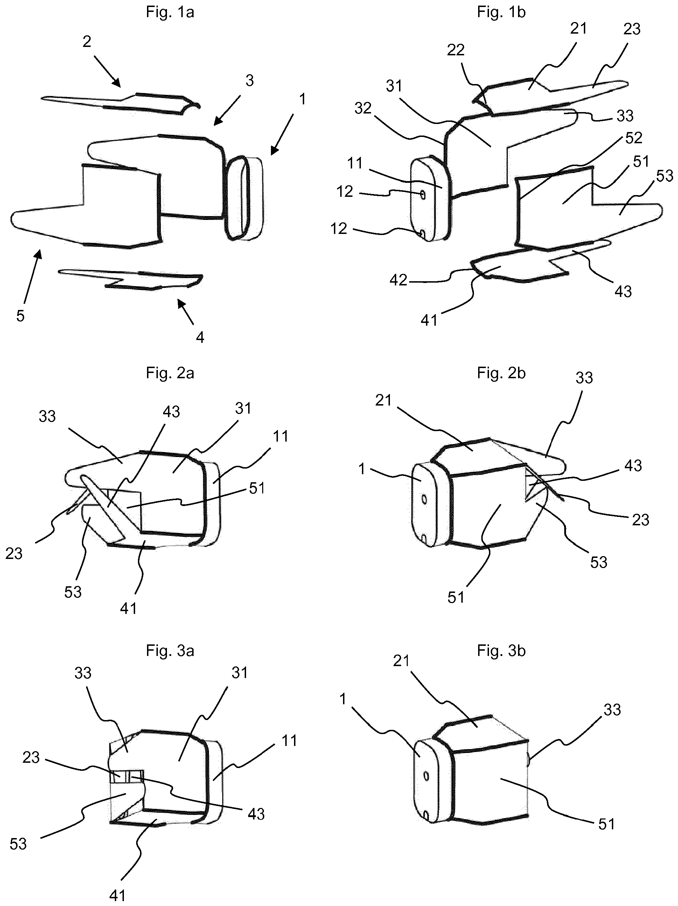

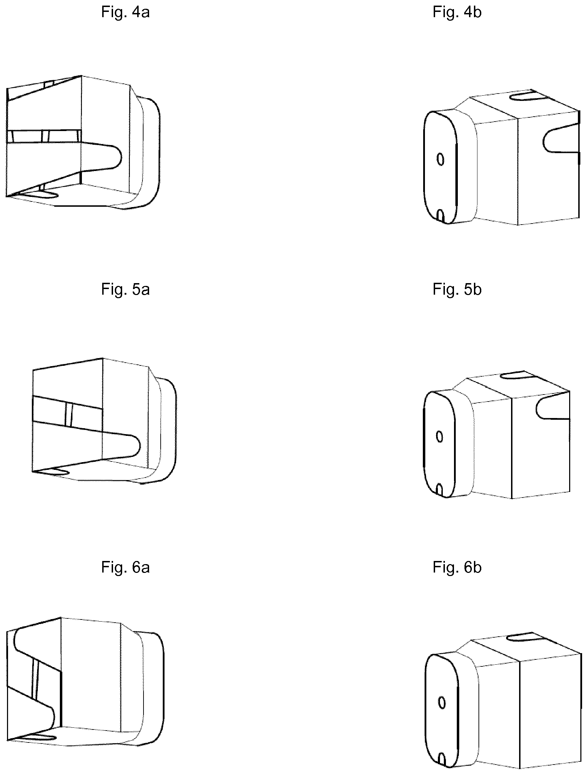

Du côté opposé au bord avant (22, 32, 42, 52, 62, 72) destiné à être relié au panneau avant, la partie principale (21, 31, 41, 51) de certains panneaux latéraux se prolonge par un rabat (23, 33, 43, 53) qui peut être rabattu et fixé sur l'un des autres panneaux latéraux (2, 3, 4, 5, 6, 7), de préférence le panneau latéral situé en vis-à-vis. La largeur du rabat (23, 33, 43, 53) peut diminuer et dans certains cas se terminer par une languette (24, 34, 44, 54). La diminution peut se faire de façon continue et symétrique (cf. Figures 1a/b à 4a/b) ou de façon continue et asymétrique (cf. Figures 5a/b et 6a/b) ou encore de façon discontinue et asymétrique (Figures 7 à 12) ou discontinue et symétrique. Les autres panneaux latéraux (6, 7) sont des panneaux simples sans rabats et sont constitués uniquement d'une partie principale (61, 71).

On peut prévoir sur certains des panneaux latéraux (5, 7) des élastiques pour froncer la housse et permettre ainsi une meilleure adaptation aux formes de l'équipement à protéger. Ces élastiques peuvent s'étendre aussi bien dans le sens parallèle au bord avant (52, 72) qu'en direction perpendiculaire au bord avant. Les élastiques sont placés de préférence dans la partie principale (51, 71) du panneau latéral. Ils peuvent être placés aussi bien sur les panneaux à rabats (5) que sur les panneaux simples (7).

De même, on peut prévoir de munir certains panneaux d'une fenêtre ou d'une poche (56) pour pouvoir soit voir à l'intérieur de la housse soit ranger des ustensiles ou des pièces détachées ou de rechange. La fenêtre est de préférence réalisée dans un matériau souple et transparent.

Le panneau avant (1) et les panneaux latéraux (2, 3, 4, 5, 6, 7) sont munis de moyens de liaison (non représentés sur les figures 1 à 6) pour les relier entre eux et les relier au panneau avant (1).

Des moyens de fixation rapide sont également prévus pour fixer chaque rabat (23, 33, 43, 53) et/ou chaque languette (24, 34, 44, 54) sur un autre panneau latéral (2, 3, 4, 5, 6, 7). La fixation peut se faire soit sur la partie principale (21, 31, 41, 51, 61, 71) d'un panneau latéral (cf. Figures 4a/b et 5a/b), soit sur un autre rabat (23, 33, 43, 53), voire une partie des rabats est fixée sur la partie principale et l'autre partie sur un rabat (cf. Figures 6a/b). Les Figures 3a/b montrent un cas limite dans lequel les rabats sont fixés à la jonction entre la partie principale et le rabat du panneau latéral en vis-à-vis.

Pour les moyens de liaison et les moyens de fixation plusieurs solutions peuvent être envisagées, parmi lesquelles :
- des boutonnières et des boutons, de préférence des boutons champignons, rentrant dans les boutonnières ;
- des crochets venant se crocheter sur les supports de boutons, de préférence les tiges de boutons champignons ;
- des bandes autoagrippantes de type Velcro ^{®}, éventuellement complétées par des boutons-pression aux extrémités ;
- des boutons-pression ;
- des sangles pouvant passer dans des boucles de serrage.

Il n'est pas nécessaire que les moyens de liaison et les moyens de fixation soient identiques. Par exemple, les parties principales (21, 31, 41, 51, 61, 71) des panneaux latéraux sont munies sur un bord latéral de boutonnières et sur l'autre bord latéral de boutons champignons, tandis que les rabats sont munis à leur extrémité libre d'un crochet. Ainsi, les parties principales (21, 31, 41, 51, 61, 71) sont reliées ensemble par boutonnage des boutons champignons dans les boutonnières du panneau adjacent et les rabats (23, 33, 43, 53) sont fixés sur la partie principale (21, 31, 41, 51, 61, 71) du panneau situé en vis-à-vis (23/41, 33/51, 43/21, 53/31) en crochetant le crochet du rabat sur l'un des boutons champignons en fonction de la taille de l'équipement à protéger. On pourra donc prévoir des boutons champignons à tige courte à l'avant du panneau latéral (côté panneau avant) et des boutons champignons à tige plus longue à l'arrière du panneau latéral, là où un crochet est susceptible d'être accroché. On peut également prévoir un ou plusieurs boutons champignons sur les rabats pour permettre la fixation du crochet d'un rabat sur un rabat adjacent ou un rabat en vis-à-vis. Les crochets peuvent être conçus de telle sorte que leur entrée soit plus étroite que l'épaisseur de la tige du bouton champignon sur lequel les crochets doivent être fixés. Ainsi, on garantit que les crochets ne peuvent pas se défaire tous seuls.

Avec des bandes autoagrippantes dont une partie est placée sur toute la longueur possible pour la fixation du rabat, il est également possible d'adapter la dimension de la housse à l'équipement à protéger.

Lors de l'assemblage de la housse, les panneaux latéraux (2, 3, 4, 5, 6, 7) sont reliés ensemble pour former le pourtour tubulaire. Ils sont également reliés au panneau avant (1) de sorte qu'il y ait de préférence un chevauchement entre le pourtour tubulaire (21, 31, 41, 51, 61, 71) et la jupe (11) du panneau avant. Les rabats (23, 33, 43, 53) sont ensuite rabattus et fixés sur le panneau opposé ou en vis-à-vis, soit sur la partie principale (23/41, 33/51, 43/21, 53/31), soit sur un autre rabat. Comme le montrent les figures 2a et 2b, les rabats (23, 33, 43, 53) chevauchent en partie le rabat des deux panneaux latéraux voisins. En prévoyant plus de boutons champignons que nécessaire ou des bandes autoaggripantes plus longues que nécessaire, il est possible d'adapter la taille de la housse à celle de l'équipement qui doit être protégé.

Les figures 3a et 3b montrent que la housse conforme à l'invention se ferme du côté opposé au panneau avant (1) à la façon d'un carton d'emballage par rabattement des rabats (23, 33, 43, 53) sur les rabats (23, 33, 43, 53) des panneaux latéraux voisins (2, 3, 4, 5).

Dans l'exemple présenté sur les figures, le rabat (23, 33, 43, 53), au niveau de sa jonction avec la partie principale (21, 31, 41, 51), est nettement moins large que la partie principale correspondante. La partie principale n'est prolongée que d'un côté par ce rabat. Au lieu de prévoir de tels panneaux asymétriques, il est également possible de prévoir que certains panneaux ne soient pas munis d'un rabat. On peut par exemple prévoir des panneaux simples correspondant sensiblement à un demi-côté et des panneaux correspondant également à un demi-panneau et prolongés sur toute leur largeur par le rabat. Lors de la fermeture de la housse, les rabats sont rabattus sur un autre panneau, généralement un panneau sans rabat. Dans le présent exemple, on aurait donc quatre panneaux à rabat et quatre panneaux sans rabat.

De même, on peut prévoir que les rabats soient des pièces séparées des parties principales (21, 31, 41, 51) formant le pourtour tubulaire, ces rabats étant reliés aux parties principales par des moyens de liaison appropriés tels que ceux utilisés pour relier les panneaux latéraux entre eux et au panneau avant.

Les rabats peuvent également être constitués par des sangles qui viennent se fixer sur une boucle de serrage correspondante placée sur un autre panneau latéral.

L'équipement à protéger peut être fixé à un support. Il faut donc que la housse contourne ce support. Si l'équipement est fixé à un support par sa face opposée au panneau avant, le support est contourné par les rabats. Si l'équipement est fixé à un support par une face latérale, le support est contourné soit par une échancrure réalisée dans la partie principale d'un des panneaux latéraux, soit il passe entre les parties principales de deux panneaux latéraux consécutifs. Si l'équipement est posé au sol, l'échancrure pour contourner son point d'appui pourra être réalisée dans deux panneaux latéraux consécutifs.

Les housses de protection conformes à l'invention sont destinées à des appareils de soudage, notamment à des pinces de soudage montées sur des bras de robots ou sur des pieds, et plus particulièrement aux robots de soudage par points.

### Liste des références :

- 1: Panneau avant
11 Jupe latérale
12 Ouvertures pour les pinces
- 2: Panneau latéral
21 Partie principale
22 Bord relié au panneau avant
23 Rabat
24 Languette
- 3: Panneau latéral
31 Partie principale
32 Bord relié au panneau avant
33 Rabat
34 Languette
- 4: Panneau latéral
41 Partie principale
42 Bord relié au panneau avant
43 Rabat
44 Languette
- 5: Panneau latéral
51 Partie principale
52 Bord relié au panneau avant
53 Rabat
54 Languette
55 Élastiques
56 Fenêtre/Poche
- 6: Panneau latéral
61 Partie principale
- 7: Panneau latéral
71 Partie principale
75 Élastiques

## Revendications

1. Housse de protection pour des appareils de soudage, la housse comprenant un panneau avant (1) et au moins deux panneaux latéraux (2, 3, 4, 5, 6, 7), chaque panneau latéral comprenant une partie principale (21, 31, 41, 51, 61, 71), le panneau avant et les panneaux latéraux étant munis de moyens de liaison pour relier entre eux les panneaux latéraux en vue de former un pourtour tubulaire et pour relier les panneaux latéraux au panneau avant, les composants (1, 2, 3, 4, 5) de la housse étant réalisés dans un matériau ininflammable et résistant aux projections de soudure, **caractérisée en ce qu'**au moins un des panneaux latéraux (2, 3, 4, 5) présente un rabat (23, 33, 43, 53) qui peut être rabattu et fixé à l'aide de moyens de fixation sur l'un des panneaux latéraux (2, 3, 4, 5, 6, 7) de sorte à refermer la housse, les moyens de fixation étant conçus pour régler la housse aux dimensions de l'équipement à protéger, la housse devant protéger l'objet lors de son utilisation tout en étant facilement démontable, lorsque l'objet protégé n'est plus en fonctionnement, pour remplacer la housse ou l'un de ses composants, ou pour accéder à l'objet protégé pour le modifier, l'entretenir ou le réparer.

2. Housse de protection selon la revendication 1, **caractérisée en ce que** le panneau avant est muni d'ouvertures (12) pour laisser passer les bras d'une pince de soudage.

3. Housse de protection selon la revendication 1 ou 2, **caractérisée en ce que** plusieurs panneaux latéraux sont munis d'un rabat (23, 33, 43, 53) et **en ce qu'**en position rabattue et fixée, un ou plusieurs rabats chevauchent en partie au moins le rabat d'un ou plusieurs autres panneaux latéraux, notamment le rabat des panneaux latéraux voisins.

4. Housse de protection selon la revendication 1, 2 ou 3, **caractérisée en ce que** la fixation du ou des rabats se fait sur la partie principale d'un panneau latéral et/ou sur un autre rabat.

5. Housse de protection selon l'une des revendications précédentes, **caractérisée en ce qu'**un ou plusieurs panneaux latéraux sont munis d'une échancrure réalisée dans la partie principale du ou des panneaux latéraux, de préférence entre deux panneaux latéraux consécutifs, pour contourner un support sur lequel est fixé l'équipement à protéger.

6. Housse de protection selon l'une des revendications précédentes, **caractérisée en ce qu'**un ou plusieurs panneaux latéraux (5, 7) sont munis d'un ou plusieurs élastiques (55) dans leur partie principale (51, 71), ces élastiques s'étendant de préférence parallèlement au bord (52, 72) du panneau latéral destiné à être relié au panneau avant (1).

7. Housse de protection selon l'une des revendications précédentes, **caractérisée en ce qu'**une ou plusieurs fenêtres ou une ou plusieurs poches sont réalisées dans au moins un des panneaux latéraux, la ou les fenêtres étant de préférence réalisée dans un matériau souple transparent.

8. Housse de protection selon l'une des revendications précédentes, **caractérisée en ce que** le ou les rabats (23, 33, 43, 53) présentent une largeur moindre que la partie principale (21, 31, 41, 51) du panneau latéral.

9. Housse de protection selon l'une des revendications précédentes, **caractérisée en ce que** le ou les panneaux latéraux (2, 3, 4, 5) munis d'un rabat ont une partie principale essentiellement rectangulaire (21, 31, 41, 51) qui se poursuit sur un côté opposé au panneau avant (1) par le rabat (23, 33, 43, 53).

10. Housse de protection selon l'une des revendications 1 à 8, **caractérisée en ce que** la largeur de chaque rabat (23, 33, 43, 53) diminue de manière continue jusqu'au bout du rabat.

11. Housse de protection selon l'une des revendications 1 à 8, **caractérisée en ce que** la largeur de chaque rabat (23, 33, 43, 53) est essentiellement constante sur toute la longueur du rabat.

12. Housse de protection selon l'une des revendications précédentes, **caractérisée en ce que** les moyens de liaison et/ou les moyens de fixation sont constitués d'une part par des boutonnières et d'autre part par des boutons, de préférence des boutons champignons, destinés à rentrer dans ces boutonnières.

13. Housse de protection selon l'une des revendications précédentes, **caractérisée en ce que** les moyens de liaison et/ou les moyens de fixation sont constitués d'une part par des boutons, de préférence des boutons champignons, et d'autre part par des crochets destinés à s'accrocher sur le support d'un des boutons, notamment sur la tige d'un bouton champignon.

14. Housse de protection selon l'une des revendications précédentes, **caractérisée en ce que** les moyens de liaison et/ou les moyens de fixation sont constitués par des bandes autoagrippantes.

15. Utilisation d'une housse de protection selon l'une des revendications précédentes pour protéger des appareils de soudage, en particulier des appareils de soudage par points.

## Patentansprüche

1. Schutzhülle für Schweißgeräte, wobei die Hülle ein Vorderschild (1) und mindestens zwei Seitenschilder (2, 3, 4, 5, 6, 7) umfasst, wobei jedes Seitenschild einen Hauptteil (21, 31, 41, 51, 61, 71) aufweist, wobei das Vorderschild und die Seitenschilder mit Verbindungsmitteln versehen sind, um die Seitenschilder miteinander zu verbinden, um eine röhrenförmige Ummantelung zu bilden, und um die Seitenschilder mit dem Vorderschild zu verbinden, wobei die Komponenten (1, 2, 3, 4, 5) der Hülle aus einem feuerfesten und den Spritzern des Schweißmaterials widerstehendem Material bestehen, **dadurch gekennzeichnet, dass** mindestens eines der Seitenschilder (2, 3, 4, 5) eine Lasche (23, 33, 43, 53) aufweist, die umgelegt werden kann und mittels Befestigungsmitteln an einem der Seitenschilder (2, 3, 4, 5, 6, 7) befestigt werden kann, so dass die Hülle geschlossen wird, wobei die Befestigungsmittel so gestaltet sind, dass die Hülle an die Abmessungen des zu schützenden Gerätes anpassbar ist, wobei die Hülle den Gegenstand bei seiner Verwendung schützen soll und gleichzeitig leicht abnehmbar ist, wenn der geschützte Gegenstand nicht mehr in Betrieb ist, um die Hülle oder einen ihrer Bestandteile auszutauschen oder um auf den geschützten Gegenstand zuzugreifen, um ihn zu verändern, zu warten oder zu reparieren.

2. Schutzhülle nach Anspruch 1, **dadurch gekennzeichnet, dass** das Vorderschild mit Öffnungen (12) versehen ist, durch die die Arme einer Schweißzange hindurchgeführt werden können.

3. Schutzhülle nach Anspruch 1 oder 2, **dadurch gekennzeichnet, dass** mehrere Seitenschilder mit einer Lasche (23, 33, 43, 53) versehen sind und dass in der umgeklappten und fixierten Position eine oder mehrere Laschen zumindest teilweise die Lasche eines oder mehrerer anderer Seitenschilder überlappen, insbesondere die Lasche der benachbarten Seitenschilder.

4. Schutzhülle nach Anspruch 1, 2 oder 3, **dadurch gekennzeichnet, dass** die Befestigung der der einen oder mehreren Laschen an dem Hauptteil eines Seitenschildes und/oder an einer anderen Lasche erfolgt.

5. Schutzhülle nach einem der vorhergehenden Ansprüche, **dadurch gekennzeichnet, dass** ein oder mehrere Seitenschilder mit einem Ausschnitt versehen sind, der im Hauptteil des oder der Seitenschilder, vorzugsweise zwischen zwei aufeinanderfolgenden Seitenschildern, ausgeführt ist, um einen Träger zu umgehen, an dem die zu schützende Ausrüstung befestigt ist.

6. Schutzhülle nach einem der vorhergehenden Ansprüche, **dadurch gekennzeichnet, dass** ein oder mehrere Seitenschilder (5, 7) in ihrem Hauptteil (51, 71) mit einem oder mehreren Gummibändern (55) versehen sind, wobei sich diese Gummibänder vorzugsweise parallel zu der Kante (52, 72) des Seitenschildes erstrecken, das dazu bestimmt ist, mit dem Vorderschild (1) verbunden zu werden.

7. Schutzhülle nach einem der vorhergehenden Ansprüche, **dadurch gekennzeichnet, dass** in mindestens einem der Seitenschilder ein oder mehrere Fenster oder eine oder mehrere Taschen ausgebildet sind, wobei das oder die Fenster vorzugsweise aus einem flexiblen, transparenten Material hergestellt sind.

8. Schutzhülle nach einem der vorhergehenden Ansprüche, **dadurch gekennzeichnet, dass** der oder die Laschen (23, 33, 43, 53) eine geringere Breite als der Hauptteil (21, 31, 41, 51) des Seitenschildes aufweisen.

9. Schutzhülle nach einem der vorhergehenden Ansprüche, **dadurch gekennzeichnet, dass** das oder die mit einer Lasche versehenen Seitenschilder (2, 3, 4, 5) einen im Wesentlichen rechteckigen Hauptteil (21, 31, 41, 51) aufweisen, der sich auf einer dem Vorderschild (1) gegenüberliegenden Seite in der Lasche (23, 33, 43, 53) fortsetzt.

10. Schutzhülle nach einem der Ansprüche 1 bis 8, **dadurch gekennzeichnet, dass** die Breite jeder Lasche (23, 33, 43, 53) bis zum Ende der Lasche kontinuierlich abnimmt.

11. Schutzhülle nach einem der Ansprüche 1 bis 8, **dadurch gekennzeichnet, dass** die Breite jeder Lasche (23, 33, 43, 53) über die gesamte Länge der Lasche im Wesentlichen konstant ist.

12. Schutzhülle nach einem der vorhergehenden Ansprüche, **dadurch gekennzeichnet, dass** die Verbindungs- und/oder Befestigungsmittel einerseits aus Knopfleisten und andererseits aus Knöpfen, vorzugsweise champignonförmigen Knöpfen, bestehen, die zum Eingriff in die Knopfleisten bestimmt sind.

13. Schutzhülle nach einem der vorhergehenden Ansprüche, **dadurch gekennzeichnet, dass** die Verbindungs- und/oder Befestigungsmittel einerseits aus Knöpfen, vorzugsweise champignonförmigen Knöpfen, und andererseits aus Haken, die zum Eingriff in den Träger der Knöpfe, insbesondere in den Stiel eines champignonförmigen Knopfes, bestimmt sind, bestehen.

14. Schutzhülle nach einem der vorhergehenden Ansprüche, **dadurch gekennzeichnet, dass** die Verbindungs- und/oder die Befestigungsmittel aus selbsthaftenden Bändern bestehen.

15. Verwendung einer Schutzhülle nach einem der vorhergehenden Ansprüche zum Schutz von Schweißgeräten, insbesondere von Punktschweißgeräten.

## Claims

1. Protective cover for welding apparatuses, the cover comprising a front panel (1) and at least two side panels (2, 3, 4, 5, 6, 7), each side panel comprising a main part (21, 31, 41, 51, 61, 71), the front panel and the side panels being provided with connecting means to connect the side panels with one another in order to form a tubular surrounding member and to connect the side panels to the front panel, the components (1, 2, 3, 4, 5) of the cover being made of a material that is non-flammable and resistant to welding splatter, **characterized in that** at least one of the side panels (2, 3, 4, 5) has a flap (23, 33, 43, 53) which can be folded and fastened by means of fastening means on one of the side panels (2, 3, 4, 5, 6, 7) so as to close the cover, the fastening means being designed to adjust the cover to the dimensions of the equipment to be protected, the cover being designed to protect the object during its use while being easy to disassemble when the protected object is no longer in use in order to replace the cover or one of its components, or to access to the protected object to modify, maintain or repair it.

2. A protective cover according to claim 1, **characterized in that** the front panel is provided with openings (12) for the passage of the arms of a welding gun.

3. Protective cover according to claim 1, **characterized in that** several side panels are provided with a flap (23, 33, 43, 53), and **in that**, in the folded and fastened position, one or more flaps overlap at least partially the flap of one or more other side panels, in particular the flap of the neighboring side panels.

4. Protective cover according to claim 1, 2 or 3, **characterized in that** the fastening of the flap or flaps is on the main part of a side panel and/or on another flap.

5. Protective cover according to one of the preceding claims, **characterized in that** one or more side panels are provided with a recess made in the main part of the one or more side panels, preferably between two consecutive side panels, to get around a support on which the equipment to be protected is fixed.

6. Protective cover according to one of the preceding claims, **characterized in that** one or more side panels (5, 7) are provided with one or more elastic bands (55) in their main part (51, 71), these elastic bands extending preferably parallel to the edge (52, 72) of the side panel intended to be connected to the front panel (1).

7. Protective cover according to one of the preceding claims, **characterized in that** one or more windows or one or more pockets are made in at least one of the side panels, the window or windows being preferably made of a transparent flexible material.

8. Protective cover according to one of the preceding claims, **characterized in that** the one or more flaps (23, 33, 43, 53) have a smaller width than the main part (21, 31, 41, 51) of the side panel.

9. Protective cover according to one of the preceding claims, **characterized in that** the one or more side panels (2, 3, 4, 5) provided with a flap have a substantially rectangular main part (21, 31, 41, 51) which is extended, on a side opposite to the front panel (1), by the flap (23, 33, 43, 53).

10. Protective cover according to one of claims 1 to 8, **characterized in that** the width of the flap (23, 33, 43, 53) decreases continuously to the end of the flap.

11. Protective cover according to one of claims 1 to 8, **characterized in that** the width of the flap (23, 33, 43, 53) is substantially constant over the entire length of the flap.

12. Protective cover according to one of the preceding claims, **characterized in that** the connecting means and/or the fastening means are constituted, on the one hand, by buttonholes, and on the other hand, by buttons, preferably mushroom buttons, intended to fit in said buttonholes.

13. Protective cover according to one of the preceding claims, **characterized in that** the connecting means and/or the fastening means are constituted, on the one hand, by buttons, preferably mushroom buttons, and on the other hand, by hooks intended to be hooked up to the support of one of the buttons, in particular to the stem of a mushroom button.

14. Protective cover according to one of the preceding claims, **characterized in that** the connecting means and/or the fastening means are constituted by self-gripping strips.

15. Use of a protective cover according to one of the preceding claims for protecting welding apparatuses, in particular spot welding apparatuses.
